# FASCICULE DE BREVET EUROPEEN

(11) **EP 3 663 953 B1**
(45) Date de publication et mention de la délivrance du brevet: **02.06.2021**
(21) Numéro de dépôt: 19213300.7
(22) Date de dépôt: 03.12.2019
(51) Int. Cl.: G06F 21/57, G06F 12/14, G06F 21/60, G06F 21/62, G06F 9/48

(54) **PROCÉDÉ ET DISPOSITIF DE CONTRÔLE D'ACCÈS À UNE RESSOURCE PARTAGÉE ENTRE TÂCHES LOGICIELLES EXÉCUTÉES DANS UN CONTEXTE APPLICATIF PRÉDÉTERMINÉ**
VERFAHREN UND GERÄT FÜR EINE ZUGANGSKONTROLLE EINER GETEILTEN RESSOURCE ZWISCHEN SOFTWARE AUFGABEN IN EINER VORMESTIMMTEN IMPLEMENTIERUNGSKONTEXT
METHOD AND DEVICE FOR ACCESS CONTROL TO A RESOURCE SHARED BETWEEN SOFTWARE TASKS IN A PREDETERMINED IMPLEMENTATION CONTEXT

(30) Priorité: 05.12.2018 FR 1872348
(43) Date de publication de la demande: 10.06.2020
(73) Titulaire: Thales, 92400 Courbevoie (FR)
(72) Inventeur: MACE, Gaël, 49309 CHOLET (FR); VASLIN, Romain, 49309 CHOLET (FR); ROHAT, Sylvain, 49309 CHOLET (FR)
(74) Mandataire: Lavoix

(56) Documents cités:
- FR-A1- 2 829 847
- FR-A1- 2 829 848
- US-B1- 7 844 973

## Description

La présente invention concerne un procédé de contrôle d'accès à au moins une ressource partagée entre tâches logicielles exécutées dans un contexte applicatif prédéterminé, et un dispositif électronique de calcul à contrôle d'accès associé.

L'invention se situe dans le domaine de la sécurité des logiciels, et en particulier la sécurité d'accès aux ressources partagées dans un système informatique.

L'invention s'applique notamment pour la sécurisation des applications logicielles exécutées sur des dispositifs embarqués sensibles, qu'il s'agisse de dispositifs de communication, par exemple une radio logicielle, ou des dispositifs de commande ou de pilotage.

L'invention s'applique également dans le domaine du contrôle commande industriel, et plus généralement dans tout système fermé mettant en œuvre des logiciels prédéterminés, dans un contexte applicatif prédéterminé, pour lesquels un niveau élevé de sécurité d'exécution est nécessaire.

De manière connue, un dispositif électronique de calcul, en particulier un dispositif embarqué, comprend des ressources matérielles (ou « hardware » en anglais) qui sont gérées par un système d'exploitation qui comprend un noyau exécutable en mode privilégié. On entend par « mode privilégié » l'anneau de protection de l'architecture d'un processeur, tel que défini dans l'encyclopédie en ligne Wikipedia, à partir duquel est autorisée la configuration des accès aux ressources matérielles.

Toute application logicielle (« software » en anglais), également appelée service, est implémentée par des instructions logicielles, c'est-à-dire des instructions de code de programme exécutable, l'exécution par les ressources matérielles étant supportée par le système d'exploitation. Les applications logicielles sont exécutées en « mode non privilégié », c'est-à-dire dans un anneau de protection où elles ne sont pas autorisées à modifier la configuration des accès aux ressources matérielles du dispositif électronique de calcul.

Chaque application logicielle est en général constituée de plusieurs tâches logicielles à exécuter, et un contexte applicatif comporte plusieurs applications logicielles, pouvant s'exécuter de façon concurrente et chercher à accéder à des ressources matérielles partagées de manière concurrente.

Les ressources matérielles comprennent en particulier des ressources mémoire, par exemple des mémoires de travail (RAM, ROM) et/ou des registres de périphériques. Il est courant que des tâches logicielles cherchent à accéder de manière concurrente, en écriture et/ou en lecture, à une même ressource mémoire. Pour gérer les conflits, l'accès à la ressource partagée doit donc être contrôlé.

De manière connue il est possible de mettre en œuvre un système de jeton, indiquant si une ressource matérielle est disponible ou non. Dans un tel système, toute tâche logicielle peut accéder à une ressource matérielle partagée si elle a été libérée auparavant.

Pour certaines applications ou dans certains contextes applicatifs, il est critique d'assurer une sécurité plus élevée, par exemple d'assurer la séquentialité d'accès successifs, à une même ressource matérielle, par des tâches logicielles exécutées en mode non privilégié.

Il existe des méthodes cherchant à assurer une telle sécurité au niveau applicatif, c'est-à-dire dans une couche logicielle qui est implémentée en « mode non privilégié ». De telles méthodes sont complexes et l'évaluation de la sécurité est également complexe.

Le document FR 2829848 est considéré comme étant un art antérieur pertinent et divulgue un procédé de gestion d'accès simultané à une ressource partagée permettant de conserver une demande d'accès à cette ressource partagée et d'y répondre favorablement et automatiquement dès que la ressource partagée se libère.

L'invention a pour objet de remédier aux inconvénients de l'état de la technique en améliorant le contrôle d'accès à des ressources matérielles partagées.

A cet effet, l'invention est définie par les revendications indépendantes 1 et 9 et propose, selon un premier aspect, un procédé de contrôle d'accès à au moins une ressource matérielle d'un dispositif électronique de calcul, partagée par une pluralité de tâches logicielles à exécuter dans un contexte applicatif prédéterminé, les tâches logicielles étant adaptées à être mises en œuvre par un processeur du dispositif électronique de calcul, la ou les ressources matérielles étant gérées par un système d'exploitation à noyau exécutable en mode d'exécution privilégié. Le procédé est mis en œuvre par ledit noyau du système d'exploitation et comporte une mémorisation d'une structure de configuration d'accès aux ressources matérielles partagées comportant une information relative à des transferts autorisés comprenant, pour chaque ressource matérielle partagée, au moins une indication de transfert autorisé entre une première tâche et une deuxième tâche pour une utilisation de ladite ressource. Le procédé comporte en outre, suite à une exécution d'une première tâche utilisant une ressource matérielle :
- une réception d'une requête d'acquisition de ladite ressource matérielle par une deuxième tâche, et
- une vérification d'autorisation d'acquisition par ladite deuxième tâche, comportant, si ladite ressource n'est pas libre, une vérification de transfert de l'utilisation de ladite ressource matérielle de ladite première tâche vers ladite deuxième tâche, le transfert étant effectué en fonction de ladite information relative aux transferts autorisés mémorisée dans la structure de configuration d'accès aux ressources matérielles partagées.

Avantageusement, le contrôle d'accès à au moins une ressource matérielle partagée proposé permet de garantir un séquencement de l'accès à chaque ressource partagée selon des règles prédéterminées de manière statique, et donc d'augmenter la sécurité.

Avantageusement, le contrôle d'accès aux ressources matérielles partagées est effectué par le noyau du système d'exploitation.

Le procédé de contrôle d'accès selon l'invention peut présenter une ou plusieurs des caractéristiques ci-dessous, prises indépendamment ou en combinaison, selon toutes les combinaisons techniquement acceptables.

Le procédé comporte, en cas de vérification d'autorisation négative, une génération d'alarme.

Lorsque l'information relative à des transferts autorisés est une table de transferts autorisés, le procédé comporte en outre une mémorisation dans la structure de configuration d'accès aux ressources matérielles partagées d'une table de droits d'accès aux ressources indiquant, pour chaque tâche de la pluralité de tâches logicielles, un mode d'accès autorisé pour chaque ressource matérielle.

La requête d'acquisition comporte au moins un mode d'accès à ladite ressource matérielle partagées, le procédé comportant, en cas de vérification d'autorisation positive, une vérification du ou des modes d'accès autorisés pour ladite deuxième tâche à ladite ressource matérielle, et une génération d'alarme si ledit au moins un mode d'accès à ladite ressource requis n'est pas un mode d'accès autorisé selon ladite structure de configuration d'accès aux ressources partagées.

Le transfert d'une ressource de ladite première tâche vers ladite deuxième tâche comporte une mémorisation d'un identifiant de la deuxième tâche en tant que tâche destinataire de transfert et une modification d'une configuration de ladite ressource matérielle.

Le procédé comporte une mémorisation d'une pluralité de structures de configuration d'accès aux ressources matérielles partagées, chaque structure de configuration d'accès aux ressources matérielles partagées étant associée à un contexte applicatif prédéterminé.

La ou les ressources matérielles sont des dispositifs électroniques adressables par le système d'exploitation à noyau.

La structure de configuration d'accès aux ressources matérielles partagées définit, pour chacun desdits dispositifs électroniques adressables, un droit d'accès en lecture et/ou en écriture ou une absence de droit d'accès pour chaque tâche logicielle de la pluralité de tâches logicielles.

Selon un autre aspect, l'invention concerne un dispositif électronique de calcul à contrôle d'accès à au moins une ressource matérielle, le dispositif comportant au moins une ressource matérielle partagée par une pluralité de tâches logicielles à exécuter dans un contexte applicatif prédéterminé, et un processeur adapté à exécuter lesdites tâches, la ou les ressources matérielles étant gérées par un système d'exploitation à noyau exécutable en mode d'exécution privilégié. Le noyau du système d'exploitation est configuré pour mettre en œuvre une mémorisation d'une structure de configuration d'accès aux ressources matérielles partagées comportant une information relative à des transferts autorisés comprenant, pour chaque ressource matérielle partagée, au moins une indication de transfert autorisé entre une première tâche et une deuxième tâche pour une utilisation de ladite ressource. Le noyau du système d'exploitation est configuré en outre pour mettre en œuvre, suite à une exécution d'une première tâche utilisant une ressource matérielle,
- une réception d'une requête d'acquisition de ladite ressource matérielle par une deuxième tâche, et
- une vérification d'autorisation d'acquisition par ladite deuxième tâche, comportant, si ladite ressource n'est pas libre, une vérification de transfert de l'utilisation de ladite ressource matérielle de ladite première tâche vers ladite deuxième tâche, le transfert étant effectué en fonction de ladite information relative aux transferts autorisés mémorisée dans la structure de configuration d'accès aux ressources matérielles partagées.

Selon un autre aspect l'invention concerne un programme d'ordinateur comportant des instructions de code qui, lorsqu'elles sont mises en œuvre par un noyau d'un système d'exploitation d'un dispositif électronique programmable, mettent en œuvre un procédé de contrôle d'accès à au moins une ressource matérielle du dispositif électronique de calcul tel que brièvement ci-dessus.

D'autres caractéristiques et avantages de l'invention ressortiront de la description qui en est donnée ci-dessous, à titre indicatif et nullement limitatif, en référence aux figures annexées, parmi lesquelles :
- [Fig 1] la figure 1 est un bloc-diagramme des principaux blocs matériels et logiciels d'un dispositif électronique de calcul mettant en œuvre l'invention selon un mode de réalisation ;
- [Fig 2] la figure 2 est une illustration schématique d'une structure de configuration d'accès aux ressources matérielles partagées ;
- [Fig 3] la figure 3 est une illustration schématique des états des ressources matérielles partagées dans un mode de réalisation d'un procédé de contrôle selon l'invention ;
- [Fig 4] la figure 4 est un ordinogramme des principales étapes d'un procédé de contrôle d'accès à une ressource matérielle partagée selon un mode de réalisation ;
- [Fig 5] la figure 5 est un ordinogramme des sous-étapes d'acquisition d'une ressource partagée matérielle dans un procédé de contrôle d'accès selon un mode de réalisation ;
- [Fig 6] la figure 6 est un ordinogramme des sous-étapes d'un transfert de ressource matérielle partagée dans un procédé de contrôle d'accès selon un mode de réalisation ;
- [Fig 7] la figure 7 est un ordinogramme des sous-étapes d'une libération de ressource partagée dans un procédé de contrôle d'accès selon un mode de réalisation.

L'invention s'applique en particulier dans un système d'exécution fermé, par exemple dans un dispositif électronique de calcul embarqué, et pour un ou plusieurs contextes applicatifs prédéfinis. Elle sera décrite en termes génériques car elle s'applique dans divers contextes applicatifs.

On appelle contexte applicatif une configuration contextuelle du noyau définissant les caractéristiques d'un système applicatif (une application), incluant notamment la liste des tâches composant ce système, des configurations mémoires associées à chacune des tâches, des moyens de communications liant ces tâches et les états du système applicatif dans lesquels les tâches peuvent s'exécuter et communiquer.

On considère de manière générale qu'un même dispositif électronique de calcul est utilisé pour un nombre quelconque supérieur ou égal à un de contextes applicatifs.

Ainsi, pour chaque contexte applicatif, les tâches logicielles associées à ce contexte applicatif sont connues et dénombrables.

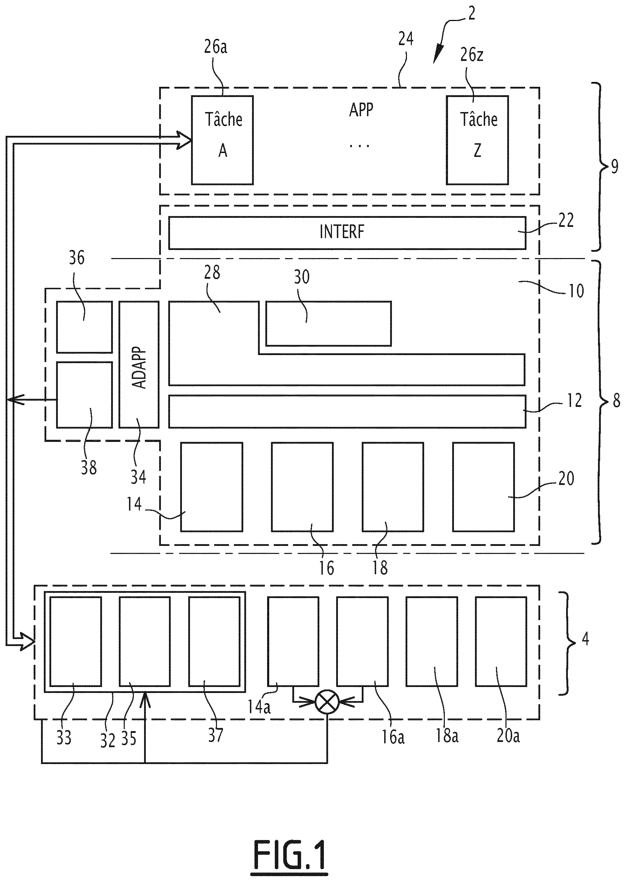

La figure 1 illustre schématiquement un système 2 matériel et logiciel mis en œuvre dans un dispositif électronique de calcul électronique selon un mode de réalisation de l'invention.

Le système 2 comporte un ensemble 4 de ressources matérielles ou « hardware » en anglais, constitué dans cet exemple de plusieurs blocs matériels, et plusieurs ensembles de blocs logiciels 8, 9.

Les ressources matérielles comprennent un processeur de calcul CPU (pour *« Central Processing Unit* » en anglais) 14a, un gestionnaire de mémoire virtuelle 16a appelé MMU pour « *Memory Management Unit »* en anglais, un module de gestion des interruptions 18a et, un générateur d'horloge 20a utilisé notamment pour la détection de blocage du système.

Les ressources matérielles 4 comportent également des ressources matérielles partagées 32, en particulier comprenant tout dispositif électronique adressable par le système à noyau.

Les ressources matérielles partagées comportent des mémoires électroniques adressables 37, de type RAM (pour « Random Access Memory »), mémoire morte ROM, PROM, FLASH, NVRAM. Les ressources matérielles partagées comportent également des registres 33,.., 35 de ressources électroniques, par exemple des bus de données Ethernet, SPI (« serial peripheral interface »), I2C® (inter-integrated circuit), UART (« Universal Asynchronous Receiver-Transmitter »).

Les ressources matérielles 4 sont contrôlées par un système d'exploitation 8, qui comporte divers blocs fonctionnels d'instructions de code de contrôle « *hardware* », également connus sous le noms de pilotes (« *drivers* » en anglais), exécutés dans le mode d'exécution dit privilégié.

Le système d'exploitation est par exemple un système de type Linux, ou VxWorks® ou QNX ®, enrichi par des fonctionnalités de contrôle d'accès aux ressources matérielles partagées selon les divers modes de réalisation de l'invention.

Ce système 8 comporte un noyau ou tronc commun 10, qui comporte une interface 12 bas niveau, également appelée interface HAL pour « Hardware Abstract Layer » qui permet d'interfacer les commandes du noyau 10 avec des modules pilotes 14 à 20 adaptés à contrôler directement les ressources matérielles 14a à 20a.

Ces modules pilotes adaptés à contrôler directement les ressources matérielles comprennent un contrôleur 14 du processeur de calcul, un contrôleur 16 de gestionnaire de mémoire virtuelle, un module 18 de gestion des interruptions et, optionnellement, un module de vérification 20 également connu sous le nom de « *Watchdog* » en anglais.

Le noyau 10 comporte également une interface 22 haut niveau, adaptée à supporter l'exécution d'applications logicielles 24. La ou les applications logicielles comportent une pluralité de tâches logicielles 26a à 26z, appelées simplement « tâches » par la suite.

Chaque tâche est implémentée sous forme d'instructions de code de programme, dans un langage donné, compilé pour être exécutable par les ressources matérielles du dispositif électronique de calcul grâce à l'interface 22.

L'interface haut-niveau 22 et les tâches logicielles 26a à 26z font partie des applications logicielles 9 qui sont exécutées, dans un exemple de réalisation, en mode non privilégié.

L'exécution d'une tâche logicielle met en œuvre, de manière connue, des calculs effectués par le processeur 14a, des données et paramètres mémorisés en utilisant par exemple le module gestionnaire de mémoire virtuelle 16a.

Le noyau 10 est configuré pour gérer l'ordonnancement d'exécution des tâches logicielles, notamment lorsque plusieurs tâches logicielles sont concurrentes, c'est-à-dire doivent être exécutées simultanément.

Il est entendu qu'en général, le système logiciel et matériel supporte un certain niveau de parallélisme d'exécution de tâches, mais pour simplifier l'explication, nous considérerons dans ce qui suit l'exemple de tâches logicielles concurrentes faisant appel aux mêmes ressources, pour lesquelles l'exécution en parallèle n'est pas envisagée.

Pour la gestion de l'ordonnancement et de l'exécution des tâches logicielles, le noyau 10 comporte un module d'ordonnancement des tâches et de gestion des communications entre tâches 28.

Le noyau 10 comporte également un module 30 de contrôle d'accès à des ressources matérielles partagées 32, en particulier comprenant tout dispositif électronique adressable par le système à noyau. Le module 30 utilise une structure 36 de configuration d'accès aux ressources matérielles partagées qui comprend, pour un contexte applicatif donné, un ensemble de données mémorisées comme expliqué ci-après.

Dans un système d'exécution fermé, par exemple dans un dispositif électronique de calcul embarqué, un ou plusieurs contextes applicatifs sont prédéfinis.

Pour un contexte applicatif donné, on distingue des ressources partagées par plusieurs tâches.

La structure 36 de configuration d'accès aux ressources partagées comprend, pour chaque ressource partagée, la structure de configuration mémorise les droits d'accès de chaque tâche pouvant accéder à la ressource partagée, ainsi qu'une liste possiblement vide de transferts possibles de cette ressource entre les tâches pouvant y accéder.

La structure de configuration 36 est par exemple mémorisée dans un des blocs mémoire 32.

La structure de configuration 36 est dite statique car elle est préalablement définie et mémorisée, en association avec un contexte applicatif donné, pour une pluralité de tâches identifiées et pour une ou plusieurs ressources identifiées.

Dans un mode de réalisation, il y a autant de structures de configuration d'accès aux ressources matérielles partagées que de contextes applicatifs.

En variante, une même structure de configuration d'accès aux ressources matérielles partagées mémorise les données relatives à plusieurs contextes, en lien avec chacun des contextes.

Le système comprend également une interface d'adaptation 34 permettant d'adapter le système à un contexte applicatif donné. Ainsi, plusieurs contextes applicatifs peuvent être mis en œuvre par un même dispositif. L'interface d'adaptation 34 permet d'accéder à la structure de configuration 36 associée à un contexte applicatif choisi.

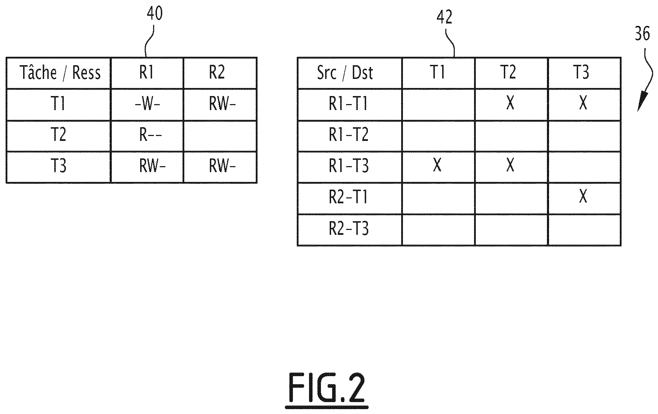

La figure 2 illustre schématiquement un exemple de structure de configuration associée 36 à un contexte applicatif prédéterminé.

Dans cet exemple, la structure de configuration 36 est une description statique du partage de ressources partagées R1, R2 entre trois tâches logicielles T1, T2 et T3.

Les tâches sont identifiées par un identifiant, par exemple un numéro de tâche. Dans l'exemple les ressources R1, R2 sont des mémoires électroniques.

La structure de configuration 36 comprend une table 40 indiquant des droits d'accès aux ressources R1, R2, par chacune des tâches listées, selon un mode d'accès autorisé : lecture (R), écriture (W), lecture-écriture (RW) ou aucun accès (case vide dans l'exemple).

Ainsi selon la table 40, la tâche T1 est autorisée à accéder à la ressource R1 en écriture et à la ressource R2 en lecture-écriture ; la tâche T2 est autorisée à accéder la ressource R1 en lecture, et n'est pas autorisée à accéder à la ressource R2 ; la tâche T3 est autorisée à accéder en lecture-écriture à chacune des ressources R1 et R2.

La structure de configuration 36 comporte également une table 42 indiquant les transferts de ressource autorisés entre tâches. La table 42 comporte, adaptée à indiquer, pour chaque ressource matérielle partagée, au moins une indication de transfert autorisé entre une première tâche (tâche utilisatrice) et une deuxième tâche (tâche destinataire) pour une utilisation de ladite ressource.

Le transfert d'une ressource d'une tâche utilisatrice à une tâche destinataire sera expliqué plus en détail ci-après.

Ainsi, selon la table 42,
- pour la ressource R1 : la tâche T1 est autorisée à transférer la ressource R1 vers la tâche T2 et vers la tâche T3 ; la tâche T2 n'est pas autorisée à transférer la ressource R1 ; la tâche T3 est autorisée à transférer la ressource R1 vers la tâche T1 et vers la tâche T2.
- pour la ressource R2, la tâche T1 est autorisée à transférer la ressource R2 à la tâche T3 ; la tâche T3 n'est autorisée à transférer la ressource R2 à aucune autre tâche.

Il est à noter que la table 42 ne comporte pas de ligne « R2-T2 » car la tâche T2 n'est pas autorisée à accéder à la ressource R2 selon la table d'autorisation d'accès 40.

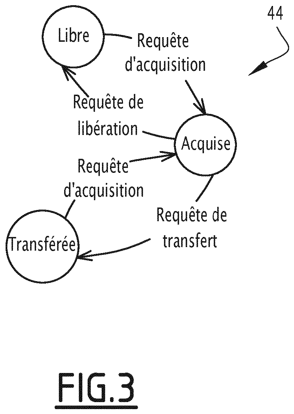

Comme illustré schématiquement dans le graphe 44 de la figure 3, chaque ressource Ri partagée peut être dans un des trois états suivants : libre, acquise ou transférée.

Une ressource est libre lorsqu'aucune tâche logicielle en cours d'exécution n'a préempté l'accès à cette ressource ou qu'elle l'a libérée après usage.

Une ressource est acquise par une tâche donnée Tj, qui utilise cette ressource, par exemple pour effectuer des écritures et/ou lectures lorsque la ressource est une ressource mémoire.

Une ressource transférée est une ressource acquise par une tâche utilisatrice et transférée par la tâche utilisatrice à une tâche destinataire, comme décrit plus en détail ci-après.

Les requêtes à formuler par des tâches pour passer de l'un à l'autre de ces états sont également schématisées dans cette figure : requête d'acquisition, requête de transfert, requête de libération.

Une ressource libre est acquise par une tâche suite à une requête d'acquisition.

Une ressource transférée est acquise, suite à une requête d'acquisition, par la tâche destinataire du transfert.

Une ressource acquise par une tâche utilisatrice Tj est libérée suite à une requête de libération.

Une ressource acquise est transférée par une tâche utilisatrice à une tâche destinataire, suite à une requête de transfert, par la tâche utilisatrice.

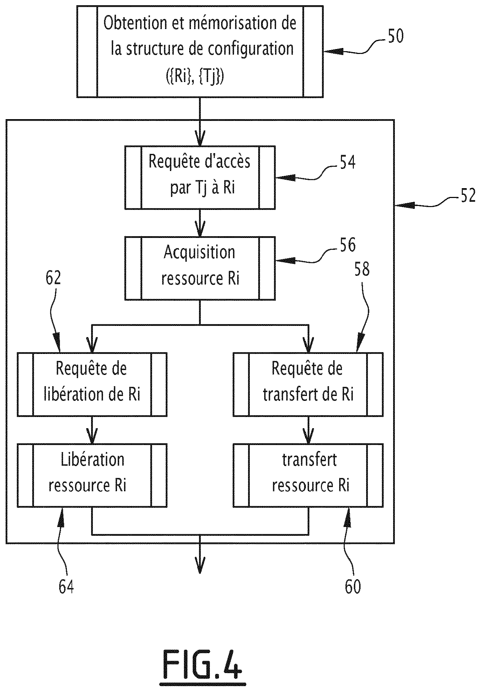

La figure 4 est un ordinogramme des principales étapes d'un procédé de contrôle d'accès aux ressources partagées selon un mode réalisation de l'invention.

Les étapes du procédé sont effectuées dans le noyau du système d'exploitation d'un dispositif électronique de calcul, en mode d'exécution privilégié.

Le procédé comporte une première étape préalable 50 d'obtention et de mémorisation d'une structure de configuration 36 d'accès aux ressources matérielles partagées, appelée structure de configuration par la suite, ou de plusieurs telles structures en fonction de divers contextes applicatifs.

Dans un mode de réalisation, la structure de configuration comporte une table indiquant les autorisations de transferts des ressources en fonction des tâches à exécuter, par exemple du type de la table 42 illustrée à la figure 2 et une table des droits d'accès aux ressources indiquant, pour chaque tâche de la pluralité de tâches logicielles, un mode d'accès autorisé pour chaque ressource matérielle, par exemple du type de la table 40 illustrée à la figure 2.

Bien entendu, le format des données mémorisées dans la structure de configuration peut être différent, par exemple des pluralités de tables par ressources, des listes ou tout autre format approprié.

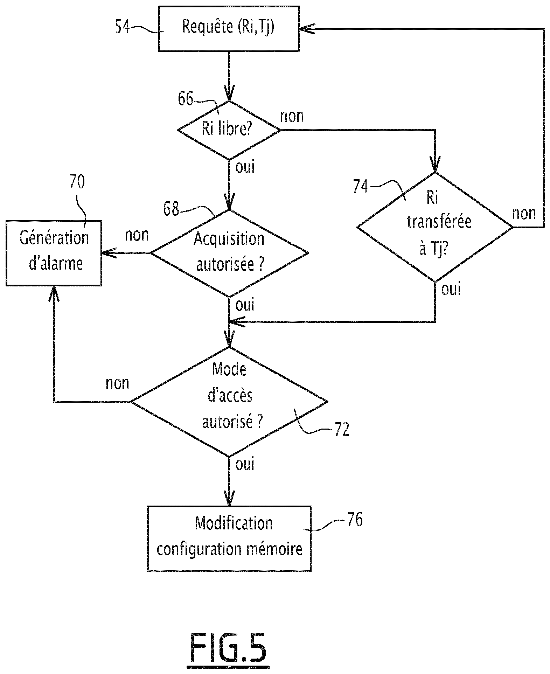

Ensuite, dans une phase d'exécution 52, pour toute exécution d'une tâche Tj, lors d'une requête d'accès à une ressource partagée Ri (étape 54) le procédé de contrôle d'accès met en œuvre une acquisition de la ressource Ri (étape 56) tel que décrit ci-dessous en référence à la figure 5.

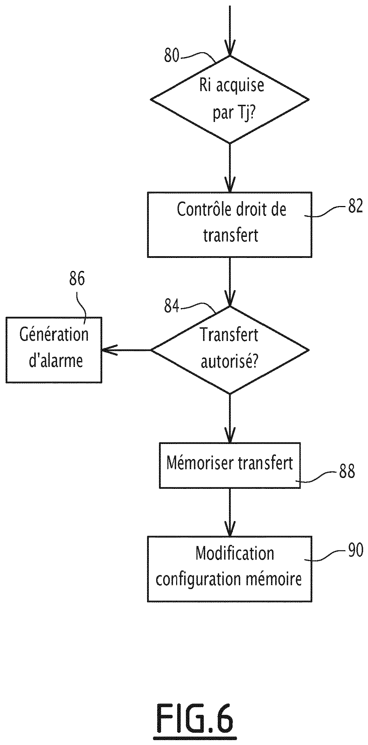

De même lors d'une requête de transfert d'une ressource partagée Ri (étape 58) le procédé de contrôle d'accès met en œuvre un transfert de ressource Ri (étape 60), tel que décrit ci-dessous en référence à la figure 6.

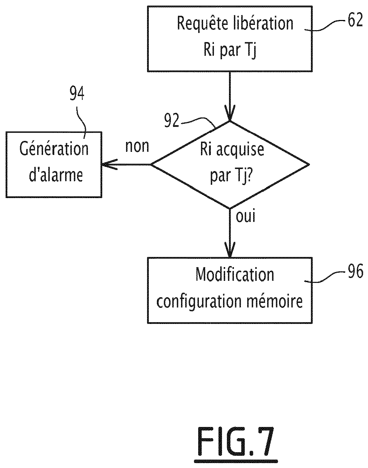

Enfin lors d'une requête de libération d'une ressource partagée Ri (étape 62) le procédé de contrôle d'accès met en œuvre une libération de ressource Ri (étape 64), tel que décrit ci-dessous en référence à la figure 7.

Les étapes d'acquisition 56, de transfert 60 et de libération 64 mettent en œuvre la structure de configuration d'accès aux ressources matérielles partagées préalablement mémorisée à l'étape 50.

Comme illustré à la figure 5, dans un mode de réalisation, suite à la requête d'accès à la ressource Ri, par exemple une ressource mémoire, par la tâche Tj, il est vérifié à l'étape 66 si la ressource Ri est libre.

Si la ressource Ri est libre (réponse positive à l'étape 66), il est ensuite vérifié à l'étape 68, à l'aide de la structure de configuration d'accès aux ressources matérielles partagées préalablement mémorisée, en particulier par accès à la table des droits d'accès, si la tâche Tj est autorisée à accéder à la ressource Ri.

En cas d'absence d'autorisation, une alarme est générée à l'étape 70. L'alarme est par exemple destinée à un processus de vérification de la sécurité d'exécution des tâches logicielles, configuré pour prendre des dispositions de blocage ou de passage en mode dégradé si nécessaire.

En cas d'autorisation, l'étape 68 est suivie d'une étape 72 de vérification de mode d'accès autorisé décrite ci-dessous.

Si la ressource Ri n'est pas libre (réponse négative à l'étape 66), l'étape 66 est suivie d'une étape de vérification de transfert 74 de la ressource Ri à la tâche Tj par la tâche utilisatrice Tc qui a acquis précédemment la ressource Ri, en d'autres termes si la tâche Tj a été désignée comme destinataire d'un transfert de la ressource Ri. Cette étape de vérification de transfert sera décrite en détail en référence à la figure 6 ci-après.

En cas de vérification négative, c'est-à-dire dans le cas où le transfert de la ressource Ri à la tâche Tj n'est pas autorisé selon la structure de configuration d'accès, l'étape 74 est suivie de l'étape 54 préalable.

En cas de vérification positive, l'étape 74 est suivie de l'étape 72 de vérification de l'autorisation d'accès en fonction du mode d'accès à la ressource Ri requis par la tâche Tj. Le mode d'accès est par exemple indiqué dans la requête d'accès.

Lorsque la ressource Ri est une ressource mémoire, le mode d'accès est un accès en écriture ou en lecture ou en lecture et écriture. L'autorisation est vérifiée également dans la structure de configuration d'accès aux ressources matérielles partagées, en particulier dans la table des droits d'accès.

En cas d'absence d'autorisation d'accès selon le mode d'accès demandé, l'étape 72 est suivie de l'étape 70 de levée d'alarme.

En cas d'autorisation, l'étape 72 est suivie d'une étape 76 de modification de la configuration mémoire de la ressource Ri pour l'accès par la tâche Tj.

Dans un mode de réalisation, la configuration MMU de la tâche courante Tj pour la zone mémoire relative à la ressource partagée est modifiée en ajoutant les droits d'accès tels que décrits dans la table des droits d'accès 40.

La figure 6 illustre un mode de réalisation du transfert d'une ressource matérielle Ri d'une tâche utilisatrice Tj à une tâche destinataire Tk.

Lors d'une première étape 80 il est vérifié si la ressource Ri est effectivement acquise par la tâche utilisatrice Tj.

Si tel est le cas, l'étape 80 de vérification est suivie d'une étape 82 de contrôle du droit de transfert de la ressource matérielle Ri de la tâche courante Tj vers la tâche destinataire Tk. L'étape 82 de contrôle met en œuvre la structure de configuration d'accès aux ressources matérielles partagées préalablement mémorisée, et en particulier les informations d'autorisations de transferts des ressources en fonction des tâches à exécuter. Par exemple, la table 42 illustrée à la figure 2 contient ces informations, et lors de l'étape 82, les informations sont vérifiées à partir de cette table.

L'étape 82 est suivie d'une vérification d'autorisation de transfert 84.

En cas d'absence d'autorisation de transfert, une étape de levée d'alarme 86, analogue à l'étape 70 préalablement décrite en référence à la figure 5.

En cas d'autorisation, l'étape 84 est suivie d'une étape 88 de mémorisation du transfert à la tâche destinataire Tk, en association avec l'identifiant de la tâche destinataire. Enfin, une étape 90 de modification de la configuration mémoire de la tâche utilisatrice courante Tj est mise en œuvre. Par exemple, dans un mode de réalisation détaillé, l'étape 90 comprend la modification de la configuration MMU de la tâche courante Tj pour la zone mémoire relative à la ressource partagée en supprimant tous les droits d'accès (lecture et écriture), puis la mémorisation d'un indicateur associé à la ressource Ri précisant son transfert en cours vers la tâche Tk.

Le transfert sera complet, lorsque la tâche destinataire Tk fera une requête d'acquisition (étape 56 décrite ci-dessus en référence à la figure 4). Lorsque le procédé d'acquisition décrit dans un mode de réalisation en référence à la figure 5 est mis en œuvre pour une tâche Tk destinataire d'un transfert, le contrôle de l'étape 74 est positif.

La figure 7 illustre un mode de réalisation de la libération d'une ressource matérielle Ri suite à une requête de libération 62 par une tâche Tj.

Il est vérifié à l'étape 92 si la ressource partagée Ri est bien acquise par la tâche Tj. En cas de vérification négative, une étape de levée d'alarme 94, analogue à l'étape 70 préalablement décrite en référence à la figure 5, est mise en œuvre. En variante, en cas de vérification négative, aucune action n'est effectuée.

En cas de vérification positive à l'étape 92, l'étape 92 est suivie d'une étape 96 de modification de la configuration mémoire est mise en œuvre. Dans un mode de réalisation détaillé, l'étape 96 comprend la modification de la configuration MMU de la tâche courante Tj pour la zone mémoire relative à la ressource partagée en supprimant tous les droits d'accès (lecture et écriture).

## Revendications

1. Procédé de contrôle d'accès à au moins une ressource matérielle d'un dispositif électronique de calcul, partagée par une pluralité de tâches logicielles à exécuter dans un contexte applicatif prédéterminé, les tâches logicielles étant adaptées à être mises en œuvre par un processeur du dispositif électronique de calcul, la ou les ressources matérielles étant gérées par un système d'exploitation (8) à noyau (10) exécutable en mode d'exécution privilégié,
**caractérisé en ce qu'**il est mis en œuvre par ledit noyau (10) du système d'exploitation et **en ce qu'**il comporte :
une mémorisation (50) d'une structure (36) de configuration d'accès aux ressources matérielles partagées comportant une information (42) relative à des transferts autorisés comprenant, pour chaque ressource matérielle partagée, au moins une indication de transfert autorisé entre une première tâche et une deuxième tâche pour une utilisation de ladite ressource,
le procédé comportant en outre, suite à une exécution d'une première tâche utilisant une ressource matérielle,
- une réception (54) d'une requête d'acquisition de ladite ressource matérielle par une deuxième tâche, et
- une vérification d'autorisation d'acquisition (66, 68, 74) par ladite deuxième tâche, comportant, si ladite ressource n'est pas libre, une vérification de transfert (74, 72, 84) de l'utilisation de ladite ressource matérielle de ladite première tâche vers ladite deuxième tâche, le transfert étant effectué en fonction de ladite information (42) relative aux transferts autorisés mémorisée dans la structure de configuration d'accès aux ressources matérielles partagées.

2. Procédé selon la revendication 1, comportant, en cas de vérification d'autorisation négative, une génération d'alarme (70, 86).

3. Procédé selon l'une quelconque des revendications 1 ou 2, dans lequel ladite information (42) relative à des transferts autorisés est une table de transferts autorisés, le procédé comportant en outre une mémorisation dans la structure (36) de configuration d'accès aux ressources matérielles partagées d'une table de droits d'accès (40) aux ressources indiquant, pour chaque tâche de la pluralité de tâches logicielles, un mode d'accès autorisé pour chaque ressource matérielle.

4. Procédé selon la revendication 3, dans lequel ladite requête d'acquisition comporte au moins un mode d'accès à ladite ressource matérielle partagées, le procédé comportant, en cas de vérification d'autorisation (68) positive, une vérification (72) du ou des modes d'accès autorisés pour ladite deuxième tâche à ladite ressource matérielle, et une génération d'alarme (70) si ledit au moins un mode d'accès à ladite ressource requis n'est pas un mode d'accès autorisé selon ladite structure (36) de configuration d'accès aux ressources partagées.

5. Procédé selon l'une des revendications 1 à 4, dans lequel le transfert d'une ressource de ladite première tâche vers ladite deuxième tâche comporte une mémorisation (88) d'un identifiant de la deuxième tâche en tant que tâche destinataire de transfert et une modification (90) d'une configuration de ladite ressource matérielle.

6. Procédé selon l'une quelconque des revendications 1 à 5, comportant une mémorisation d'une pluralité de structures de configuration d'accès aux ressources matérielles partagées, chaque structure de configuration d'accès aux ressources matérielles partagées étant associée à un contexte applicatif prédéterminé.

7. Procédé selon la revendication 6, dans lequel la ou les ressources matérielles sont des dispositifs électroniques adressables (33, 35, 37) par le système d'exploitation à noyau.

8. Procédé selon la revendication 7, dans lequel ladite structure (36) de configuration d'accès aux ressources matérielles partagées définit, pour chacun desdits dispositifs électroniques adressables, un droit d'accès en lecture et/ou en écriture ou une absence de droit d'accès pour chaque tâche logicielle de la pluralité de tâches logicielles.

9. Dispositif électronique de calcul à contrôle d'accès à une ressource partagée, le dispositif comportant au moins une ressource matérielle partagée par une pluralité de tâches logicielles à exécuter dans un contexte applicatif prédéterminé, le dispositif comportant en outre un processeur adapté à mettre en œuvre lesdites tâches logicielles, la ou les ressources matérielles étant gérées par un système d'exploitation (8) à noyau (10) exécutable en mode d'exécution privilégié, caractérisé en ce ledit noyau (10) du système d'exploitation est configuré pour mettre en oeuvre :
une mémorisation d'une structure (36) de configuration d'accès aux ressources matérielles partagées comportant une information relative à des transferts autorisés comprenant, pour chaque ressource matérielle partagée, au moins une indication (42) de transfert autorisé entre une première tâche et une deuxième tâche pour une utilisation de ladite ressource, et configuré en outre pour mettre en œuvre, suite à une exécution d'une première tâche utilisant une ressource matérielle :
- une réception d'une requête d'acquisition de ladite ressource matérielle par une deuxième tâche, et
- une vérification d'autorisation d'acquisition par ladite deuxième tâche, comportant, si ladite ressource n'est pas libre, une vérification de transfert de l'utilisation de ladite ressource matérielle de ladite première tâche vers ladite deuxième tâche, le transfert étant effectué en fonction de ladite information (42) relative aux transferts autorisés mémorisée dans la structure (36) de configuration d'accès aux ressources matérielles partagées.

10. Dispositif électronique de calcul à contrôle d'accès à une ressource partagée selon la revendication 9, dans lequel la structure (36) de configuration d'accès aux ressources matérielles partagées comporte une table (42) de transferts autorisés, et comporte en outre une table (40) de droits d'accès aux ressources indiquant, pour chaque tâche de la pluralité de tâches logicielles, un mode d'accès autorisé pour chaque ressource matérielle

## Patentansprüche

1. Verfahren zur Zugriffskontrolle auf mindestens eine Hardwareressource einer elektronischen Rechenvorrichtung, welche durch eine Mehrzahl von in einem vorbestimmen Anwendungskontext auszuführenden Softwaretasks gemeinsam genutzt wird, wobei die Softwaretasks dazu eingerichtet sind, durch einen Prozessor der elektronischen Rechenvorrichtung ausgeführt zu werden, wobei die Hardwareressource oder die Hardwareressourcen durch ein Betriebssystem (8) mit Kern (10), welcher in einem privilegierten Ausführungsmodus ausführbar ist, verwaltet werden,
**gekennzeichnet dadurch, dass** es durch den Kern (10) des Betriebssystems durchgeführt wird und es aufweist:
- eine Speicherung (50) einer Struktur (36) zum Konfigurieren des Zugriffs auf gemeinsam genutzte Hardwareressourcen, welche eine Information (42) bezüglich autorisierter Transfers aufweist, welche für jede gemeinsam genutzte Hardwareressource mindestens eine Angabe eines autorisierten Transfers zwischen einem ersten Task und einem zweiten Task für eine Nutzung der Ressource aufweist,
wobei das Verfahren ferner im Anschluss an eine Ausführung eines ersten Tasks, welcher eine Hardwareressource nutzt, aufweist
- ein Empfangen (54) einer Anfrage zur Akquisition der Hardwareressource durch einen zweiten Task, und
- ein Überprüfen der Autorisierung der Akquisition (66, 68, 74) durch den zweiten Task, aufweisend, falls die Ressource nicht frei ist, ein Überprüfen des Transfers (74, 72, 84) der Nutzung der Hardwareressource vom ersten Tasks auf den zweiten Task, wobei der Transfer in Abhängigkeit von der Information (42) bezüglich autorisierter Transfers, welche in der Struktur zum Konfigurieren des Zugriffs auf gemeinsam genutzte Hardwareressourcen gespeichert ist, durchgeführt wird.

2. Verfahren gemäß dem Anspruch 1, aufweisend, im Falle einer negativen Autorisierungsüberprüfung, ein Erzeugen einer Warnung (70, 86)

3. Verfahren gemäß einem der Ansprüche 1 oder 2, wobei die Information (42) bezüglich autorisierter Transfers eine Tabelle von autorisierten Transfers ist, wobei das Verfahren ferner eine Speicherung einer Tabelle von Zugriffsrechten (40) auf die Ressourcen, welche für jeden Task aus der Mehrzahl an Softwaretasks einen autorisierten Zugriffsmodus für jede Hardwareressource angibt, in der Struktur (36) zum Konfigurieren des Zugriffs auf gemeinsam genutzte Hardwareressourcen aufweist.

4. Verfahren gemäß dem Anspruch 3, wobei die Anfrage zur Akquisition mindestens einen Zugriffmodus auf die gemeinsam genutzte Hardwareressource aufweist, wobei das Verfahren aufweist, im Falle einer positiven Autorisierungsüberprüfung (68), ein Überprüfen (72) des oder der autorisierten Zugriffsmodi für den zweiten Task auf die Hardwareressource und ein Erzeugen einer Warnung (70), falls der angeforderte mindestens eine Zugriffsmodus auf die Ressource kein gemäß der Struktur (36) zum Konfigurieren des Zugriffs auf gemeinsam genutzte Ressourcen autorisierter Zugriffsmodus ist.

5. Verfahren gemäß einem der Ansprüche 1 bis 4, wobei der Transfer einer Ressource von dem ersten Task auf den zweiten Task eine Speicherung (89) einer Kennung des zweiten Tasks als Zieltask des Transfers und eine Modifizierung (90) einer Konfiguration der Hardwareressource aufweist.

6. Verfahren gemäß einem der Ansprüche 1 bis 5, welches eine Speicherung einer Mehrzahl von Strukturen zum Konfigurieren des Zugriffs auf gemeinsam genutzte Hardwareressourcen aufweist, wobei jede Struktur zum Konfigurieren des Zugriffs auf gemeinsam genutzte Hardwareressourcen mit einem vorbestimmten Anwendungskontext zusammenhängt.

7. Verfahren gemäß dem Anspruch 6, wobei die Hardwareressource oder die Hardwareressourcen durch das Kernbetriebssystem adressierbare elektronische Vorrichtungen (33, 35 37) sind.

8. Verfahren gemäß dem Anspruch 7, wobei die Struktur (36) zum Konfigurieren des Zugriffs auf gemeinsam genutzte Hardwareressourcen, für jede der adressierbaren elektronischen Vorrichtungen, ein Zugriffsrecht für Lesen und/oder für Schreiben oder ein Nichtvorhandensein eines Zugriffsrechts für jeden Softwaretask aus der Mehrzahl von Softwaretasks definiert.

9. Elektronische Rechenvorrichtung mit Zugriffskontrolle auf eine gemeinsam genutzte Hardwareressource, wobei die Vorrichtung mindestens eine Hardwareressource aufweist, welche durch eine Mehrzahl von in einem vorbestimmen Anwendungskontext auszuführenden Softwaretasks gemeinsam genutzt wird, wobei die Vorrichtung ferner einen Prozessor aufweist, welcher dazu eingerichtet ist, die Softwaretasks auszuführen, wobei die Hardwareressource oder die Hardwareressourcen durch ein Betriebssystem (8) mit Kern (10), welcher in einem privilegierten Ausführungsmodus ausführbar ist, verwaltet werden, **gekennzeichnet dadurch, dass** der Kern (10) des Betriebssystems dazu eingerichtet, durchzuführen:
eine Speicherung einer Struktur (36) zum Konfigurieren des Zugriffs auf gemeinsam genutzte Hardwareressourcen, welche eine Information bezüglich autorisierter Transfers aufweist, welche für jede gemeinsam genutzte Hardwareressource mindestens eine Angabe (42) eines autorisierten Transfers zwischen einem ersten Task und einem zweiten Task für eine Nutzung der Ressource aufweist, und ferner dazu eingerichtet ist, im Anschluss an eine Ausführung eines ersten Tasks, welcher eine Hardwareressource nutzt, durchzuführen:
- ein Empfangen einer Anfrage zur Akquisition der Hardwareressource durch einen zweiten Task, und
- ein Überprüfen der Autorisierung der Akquisition durch den zweiten Task, aufweisend, falls die Ressource nicht frei ist, ein Überprüfen des Transfers der Nutzung der Hardwareressource vom ersten Tasks auf den zweiten Task, wobei der Transfer in Abhängigkeit von der Information (42) bezüglich autorisierter Transfers, welche in der Struktur zum Konfigurieren des Zugriffs auf gemeinsam genutzte Hardwareressourcen gespeichert ist, durchgeführt wird.

10. Elektronische Rechenvorrichtung mit Zugriffskontrolle auf eine gemeinsam genutzte Hardwareressource gemäß dem Anspruch 9, wobei die Struktur (36) zum Konfigurieren des Zugriffs auf gemeinsam genutzte Hardwareressourcen eine Tabelle (42) von autorisierten Transfers aufweist und ferner eine Tabelle von Zugriffsrechten (40) auf die Ressourcen, welche für jeden Task aus der Mehrzahl an Softwaretasks einen autorisierten Zugriffsmodus für jede Hardwareressource angibt, aufweist.

## Claims

1. Method for access control to at least one material resource of an electronic calculation device, shared by a plurality of software tasks to be executed in a predetermined application context, the software tasks being adapted to be implemented by a processor of the electronic calculation device, the material resource or resources being managed by a kernel (10) operating system (8) which can be executed in a privileged execution mode,
**characterised in that** it is implemented by said kernel (10) of the operating system and **in that** it comprises:
storage (50) of a configuration structure (36) for access to shared material resources comprising information (42) relating to authorised transfers comprising, for each shared material resource, at least one indication of authorised transfer between a first task and a second task for use of said resource,
the method comprising, furthermore, following execution of a first task using a material resource,
- receipt (54) of a request for acquisition of said material resource by a second task, and
- an acquisition authorisation verification (66, 68, 74) by said second task, comprising, if said resource is not free, a verification (74, 72, 84) of transfer of use of said material resource from said first task to said second task, the transfer being effected as a function of said information (42) relating to the authorised transfers stored in the configuration structure for access to the shared material resources.

2. Method according to claim 1, comprising, in the case of a negative authorisation verification, generation of an alarm (70, 86).

3. Method according to any of the claims 1 or 2, in which said information (42) relating to authorised transfers is a table of authorised transfers, the method comprising, furthermore, storage, in the configuration structure (36) for access to the shared material resources, of a table of rights of access (40) to the resources indicating, for each task of the plurality of software tasks, an authorised access mode for each material resource.

4. Method according to claim 3, in which said acquisition request comprises at least one access mode to said shared material resource, the method comprising, in the case of a positive authorisation verification (68), a verification (72) of the access mode or modes authorised for said second task to said material resource, and generation of an alarm (70) if said at least one access mode to said required resource is not an authorised access mode according to said configuration structure (36) for access to the shared resources.

5. Method according to one of the claims 1 to 4, in which the transfer of a resource from said first task to said second task comprises storage (88) of an identifier of the second task as transfer recipient task and a modification (90) of a configuration of said material resource.

6. Method according to any of the claims 1 to 5, comprising storage of a plurality of configuration structures for access to the shared material resources, each configuration structure for access to the shared material resources being associated with a predetermined application context.

7. Method according to claim 6, in which the material resource or resources are electronic devices (33, 35, 37) addressable via the kernel operating system.

8. Method according to claim 7, in which said configuration structure (36) for access to the shared material resources defines, for each of said addressable electronic devices, a right of access in read and/or in write or an absence of an access right for each software task of the plurality of software tasks.

9. Electronic calculation device for access control to a shared resource, the device comprising at least one material resource shared by a plurality of software tasks to be executed in a predetermined application context, the device comprising, furthermore, a processor adapted to implement said software tasks, the material resource or resources being managed by a kernel (10) operating system (8) which can be executed in a privileged execution mode, **characterised in that** said kernel (10) of the operating system is configured to implement:
storage of a configuration structure (36) for access to the shared material resources comprising information relating to authorised transfers comprising, for each shared material resource, at least one indication (42) of authorised transfer between a first task and a second task for use of said resource, and configured, furthermore, to implement, following execution of a first task using a material resource:
- receipt of a request for acquisition of said material resource by a second task, and
- an acquisition authorisation verification by said second task, comprising, if said resource is not free, a verification of transfer of use of said material resource from said first task to said second task, the transfer being effected as a function of said information (42) relating to authorised transfers stored in the configuration structure (36) for access to the shared material resources.

10. Electronic calculation device for access control to a shared resource according to claim 9, in which the configuration structure (36) for access to the shared material resources comprises a table (42) of authorised transfers, and comprises, furthermore, a table (40) of rights of access to the resources indicating, for each task of the plurality of software tasks, an authorised access mode for each material resource.
